# EUROPEAN PATENT APPLICATION

(11) **EP 2 306 621 A1**
(43) Date of publication of application: **06.04.2011**
(21) Application number: 10185557.5
(22) Date of filing: 20.09.2002
(51) Int. Cl.: H02K 7/12, H02K 21/00, H02K 23/44, H02K 16/00, H02K 17/32, H02K 21/02

(54) **Axially movable rotor**

(62) Divisional of application: 02256548.5
(71) Applicant: YANG, Tai-Her, Si-Hu Town Dzan-Hwa (TW)
(72) Inventor: YANG, Tai-Her, Si-Hu Town Dzan-Hwa (TW)
(74) Representative: Watterson, Peer Marten John

(57) **Abstract**

This case is about the forces between the transmission shaft of an electric machine and the rotor. A helical structure (SC100) is installed; it consists of a helical structure (SC100) and a pre-stressed spring (SP100). Depending on the magnitude of the torque between the electric machine and the load an axial displacement is performed. Further the electric machine characteristics might be modulated.

## Description

### BACKGROUND OF THE INVENTION

### (a) Field of the Invention

This rotor axial activation modulation of electric machinery due to reverse torque is to reveal, between the electric machinery transmission rotating shaft and the electric machinery rotor, or between the electricmachinery transmission rotating shaft and the transmission element driven, there is installed a reversible activation helical mechanism and axial pre-stressed spring consist of helical nut or helical nut with ball bearing or roller bearing structure that, during the operation of the electric machinery, depending on the magnitude of the torque between the electric machinery rotor and the loading, to produce axial displacement with the electric machinery rotor, and further to modulate its electric machinery characteristics with respect to the electric machinery magnetic field or to pull axial control clutch CLS100 or to pull other selected control structure or testing device.

### (b) Description of the Prior Art

Among the rotating electric machinery products sold in the market there are electric machinery structures combining the taper rotor and taper hole electric machinery magnetic field. When activated the axial electro-magnetic attraction force will drive the axial, normally closed activation mechanism. Its function is to act as the axial driving power source to control the normally closed activation mechanism. However, its electric machinery characteristic remains singular.

### SUMMARY OF THE INVENTION

This invention is about between the electric machinery transmission shaft or electric machinery transmission shaft and the transmission element driven, there is installed a helical nut structure or helical nut structure with ball bearing or roller bearing structure, and depending on the torque between the electric machinery rotor and the loading and the driving direction, the corresponding axial displacement of the electric machinery rotor can be controlled, and further the electric machinery characteristics between the electric machinery rotor and the electro-magnetic field can be modulated or to pull selected control structure or testing device.

### BRIEF DESCRIPTION OF THE DRAWINGS

Fig. 1 is the cross sectional illustration of the main structure of this invention.
Fig. 2 is the cross sectional illustration across A-A' in Fig. 1.
Fig. 3 shows the cross sectional illustration of this invention where between the transmission shaft of the electric machinery and the loading there is installed the reverse activation helical structure.
Fig. 4 shows the cross sectional illustration of this invention where a dual electric machinery rotor formed in one body with the transmission shaft and between the dual electric machinery rotors there is installed a spring structure.
Fig. 5 shows the cross sectional illustration of this invention where the dual electric machinery rotor are installed with two separate transmission shaft structure.
Fig. 6 is the cross sectional illustration similar to Fig. 5 where between each individual transmission shaft there is installed controllable clutch.
Fig. 7 is the cross sectional illustration of realization of this invention where a pre-stressed spring is installed in between the two electric machinery rotors.
Fig. 8 is the cross sectional illustration of realization of this invention where the pre-stressed springs are installed on the outer sides of the two electric machinery rotors.
Fig. 9 is the cross sectional illustration of realization of this invention where pre-stressed springs are installed between the electric machinery rotors and on the outer sides.
Fig. 10 is the cross sectional illustration of realization of this invention where the two electric machinery rotors have individual transmission shafts and there are installed pre-stressed springs between the electric machinery rotors.
Fig. 11 is the cross sectional illustration of realization of this invention where the two electric machinery rotors have individual transmission shafts and there are installed pre-stressed springs between the electric machinery rotors and the stator.
Fig. 12 is the cross sectional illustration of realization of this invention where the two electric machinery rotors have individual transmission shafts and there are installed pre-stressed springs between the electric machinery rotors and between the individual electric machinery rotors and the stator.
Fig. 13 is the cross sectional illustration of realization of this invention where between the transmission shafts of the two electric machinery rotors there are installed controllable clutches and between the two electric machinery rotors there are installed pre-stressed spring.
Fig. 14 is the cross sectional illustration of realization of this invention where between the transmission shafts of the two electric machinery rotors there are installed controllable clutches and between the two electric machinery rotors and the stator on the outside there are installed pre-stressed spring.
Fig. 15 is the cross sectional illustration of realization of this invention where between the transmission shafts of the two electric machinery rotors there are installed controllable clutches and between the two electric machinery rotors and between the individual electric machinery rotors and the stator on the outside there are installed pre-stressed springs.
Fig. 16 is the cross sectional illustration of this invention which is an axial multiple circuit squirrel cage rotor structure.
Fig. 17 is the cross sectional illustration of the realization of this invention with axial extension brush armature.
Fig. 18 is the cross sectional illustration of the realization of this invention by using the reverse torque to produce axial activation in order to pull axial control clutch.
Fig. 19 is the cross sectional illustration of the realization of this invention which is the electric machinery magnetic field or electric machinery rotor for axial modulation settings.

### DETAILED DESCRIPTION OF THE PREFERRED EMBODIMENTS

This electric machinery modulated by axially activated rotor due to reverse torque is to reveal, between the electric machinery transmission shaft and the electric machinery rotor, or between the electric machinery transmission shaft and the transmission element being driven, there is installed a reverse activation helical structure consist of helical propeller structure or helical propeller structure with ball bearing or roller bearing structure that during the operation of the electric machinery, through the reverse torque between the electric machinery rotor and the loading, to drive the electric machinery rotor to produce axial displacement, and further to modulate the electric machinery characteristics between the electric machinery rotor and the electric machinery magnetic field or to pull axial controlling clutch CLS100 or to pull other selected control structure or testing device.

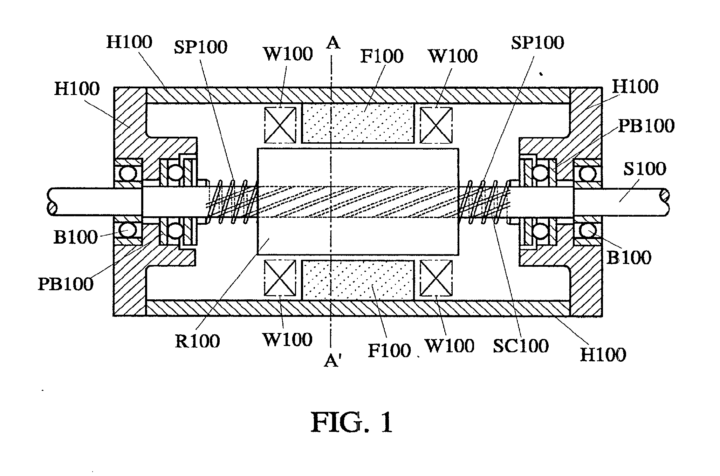

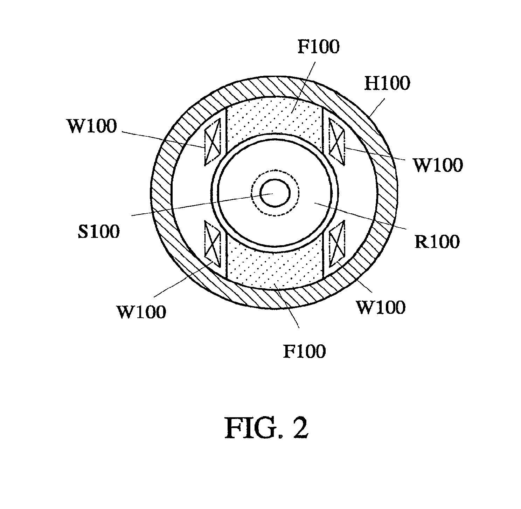

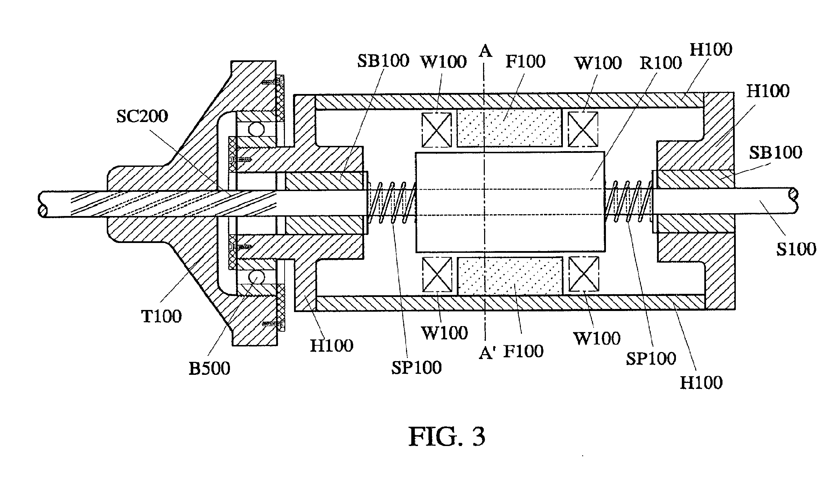

Fig. 1 shows the cross sectional illustration of the main structure of this invention. Fig. 2 is the cross sectional illustration of Fig. 1 along A-A'; the major constituents include:
- - Electric machinery magnetic field F100: Including the constituents of DC or AC generators or motors structures; These structures include:
   - F1:: Between the poles of the electric machinery magnetic field and the electric machinery rotor of which the electric machinery magnetic field exhibits normal stable even distribution; or
   - F2:: Between the poles of the electric machinery magnetic field and the electric machinery rotor of which the axial single side or double sides exhibit different electric machinery magnetic field intensity; or
   - F3:: Between the poles of the electric machinery magnetic field and the electric machinery rotor of which the axial single side or double sides exhibit different gap structures with electric machinery rotor; or
   - F4:: Between the poles of the electric machinery magnetic field and the electric machinery rotor whose axial single side or double sides consist of multiple permanent magnetic poles or magnetic poles excited by magnetic windings W100 or combinations of both which consist of axial serial structures; or
   - F5:: The structures formed by two or more of the structures described in F1 through F4;
--The electric machinery rotor R100: Including single ormixed electric machinery rotors consist of various commonly used AC or DC generators or motors such as permanent, salient, hysteresis , wound, brush, turbo, squirrel-cage type AC or DC or brush or brushless, synchronous or asynchronous, whereas its reverse torque structure for the rotor axial activation modulation includes:
   (1) Between the electric machinery rotor R100 and transmission shaft S100 there is installed the reverse activation helical structure SC100 consists of helical propeller structure or helical propeller structure with ball bearing or roller bearingstructure,between the electric machinery rotor R100 and single side or dual sides of the stator H100 there is installed the rotary bearing B100 and thrust bearing PB100, and there is installed a free movable rotating axial pre-stressed spring SP100, such that when the electric machinery rotor R100 and the transmission shaft S100 is operating as generator or motor, through the torque between the electric machinery rotor R100 and transmission shaft S100 acting on the reversible activation helical structure SC100 in between and producing axial displacement along preset direction, so as to produce between the electric machinery rotor R100 and the electric machinery magnetic field F100 the preset modulation of the generator or motor feature or pulling axial controlling clutch CLS100 or pulling other selected control structures or testing devices; or
   (2) This rotor axial activation modulation of electric machinery due to reverse torque can be as shown in Fig. 2 where between the transmission shaft S100 of the electric machinery and the transmission structure T100 on the loading side there is installed a reversible activation helical structure SC200 consist of helical propeller structure or helical propeller structure with ball bearing or roller bearing structure, between the transmission shaft S100 of the electric machinery and the stator H100 there is installed a bearing SB100 for the rotary driving and axial displacement, and there is installed a bearing SB100 for the transmission shaft S100 to perform rotary driving and axial displacement, and between the electric machinery rotor and single side or dual sides of the stator H100 there is installed a free movable rotating axial pre-stressed spring SP100 structure, whereas the transmission structure T100 on the output loading side, through the axial pulling resistance and rotating bearing B500 structure to connect to the stator H100, such that when the electric machinery rotor R100 and the transmission shaft S100 is operating as generator or motor, its reverse torque through the action of the reversible activation helical structure SC200 between transmission rotating shaft S100 and the transmission shaft on the loading side, and produce the axial displacement in the preset direction, so as to generate the modulation of the setting of generator or electric machinery features or pulling selected control structure or testing devices, as shown in Fig. 3 is the cross sectional illustration of this invention where between the transmission rotating shaft and the transmission structure on the loading side there is installed a reversible activation helical structure, of which the cross sectional illustration along A-A' is the same as Fig. 2; or
   (3) Described in (1) where between the electric machinery rotor R100 and transmission rotating shaft S100 the installed reversible activation helical structure SC100 consists of helical propeller structure or helical propeller structure with ball bearing or roller bearing structure, and further include using human, or mechanical, or fluid, or electrical driven relevant device to produce axial driving to the transmission shaft, modulate and setting the relative positions of the electric machinery rotor R100 and electric machinery magnetic field F100 to actively control the electric machinery characteristics or to pull selected control mechanism or testing devices, in addition depending on the need to install relative displacement limitation device between electric machinery rotor R100 and transmission rotating shaft S100 or position locking device; or
   (4) Described in (1) previously between the electric machinery rotor R100 and transmission shaft S100 the installed reversible activation helical structure SC100 consists of helical propeller structure or helical propeller structure with ball bearing or roller bearing structure, between the axial pre-stressed spring SP100 structure installed on its single side or both sides and stator H100, can be further installed relevant structural device driven by human, or mechanical, or fluid, or electrical power, so as to produce pre-stressed control and axial displacement setting to the pre-stressed spring SP100, in order to actively control and setting pre-stressed spring SP100 for axial pre-stress of the electric machinery rotor R100, and to control and setting the relative relationship of the electric machinery rotor R100 and electric machinery magnetic field F100 and further to control the electric machinery characteristics or to pull selected control mechanism or testing devices; or
   (5) Described in (2) previously between the transmission shaft S100 and the transmission structure on the loading side T100 there is installed the reversible activation helical structure SC200 consist of helical propeller structure or helical propeller with ball bearing or roller bearing structure, between the transmission shaft of the electric machinery rotor R100 and the stator H100 there is installed a bearing SB100 for the transmission shaft S100 to perform rotating driving and axial displacement, and between the electric machinery R100 and single side of double sides of the stator H100 there is installed a free movable rotating axial pre-stressed spring SP100 structure, and further include using human, or mechanical, or fluid, or electrical driven relevant device to produce reversal driving to the transmission shaft S100, further to control and set the relative position of the electric machinery rotor R100 and electric machinery magnetic field F100, to actively control electric machinery characteristics or pull selected control structure or testing device, in addition depending on the need between the electric machinery rotor R100 and transmission shaft S100 there can be installed relative position limiting device or position locking device; or
   (6) Described in (2) previously between the transmission shaft S100 and the transmission structure on the loading side T100 there is installed a reversible activation helical structure SC200 consist of helical propeller structure or the helical propeller structure with ball bearing or roller bearing, between the transmission shaft S100 of the electric machinery rotor R100 and the stator H100 there is installed the bearing SB100 for the transmission shaft for rotating driving and axial displacement, and between the electric machinery rotor R100 and single side or double sides of the stator H100 there is installed a free movable mutating axial pre-stress spring SP100 structure, and further to install include using human, or mechanical, or fluid, or electrical driven relevant device, so as to perform pre-stressed control and axial displacement setting to the pre-stressed spring SP100, and actively control and set the axial pre-stress of the pre-stressed spring SP100 with respective to the electric machinery rotor R100, and to control and set the positional relationship between the electric machinery rotor R100 and electric machinery magnetic field F100, and further to control electric machinery characteristics or to pull selected control structure or testing device.

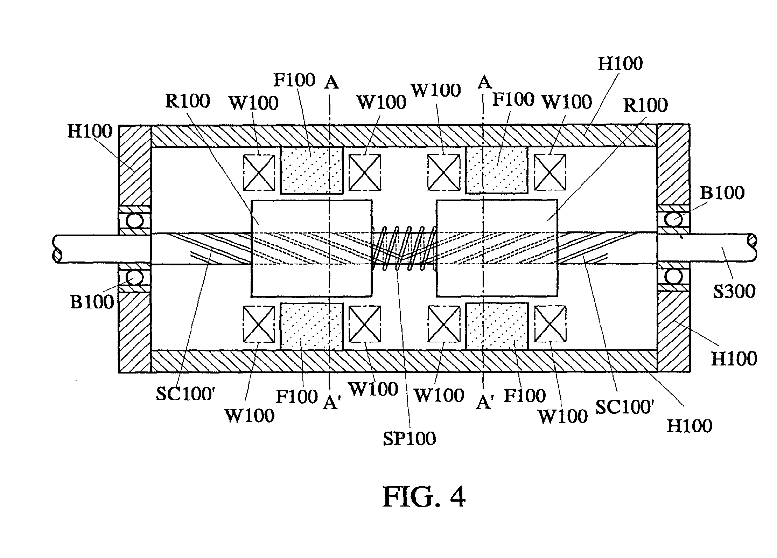

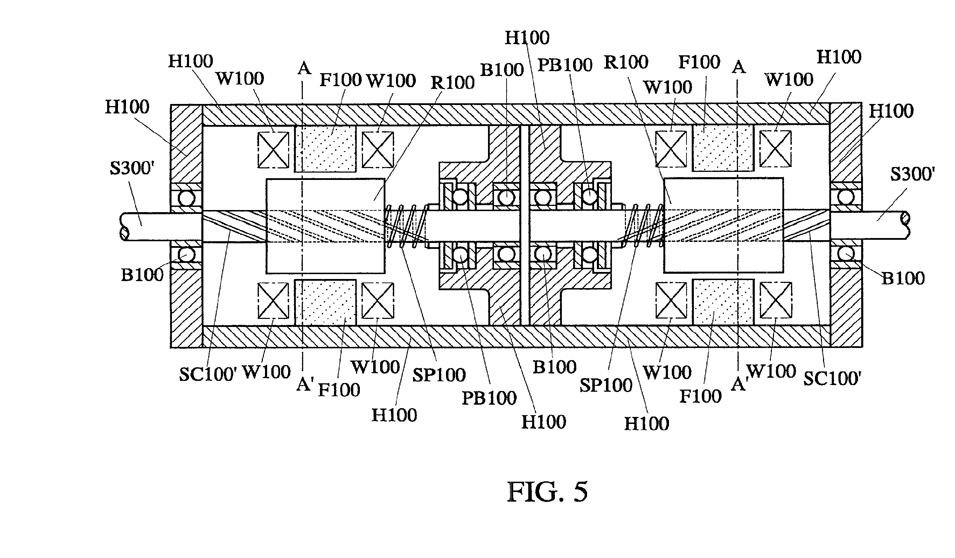

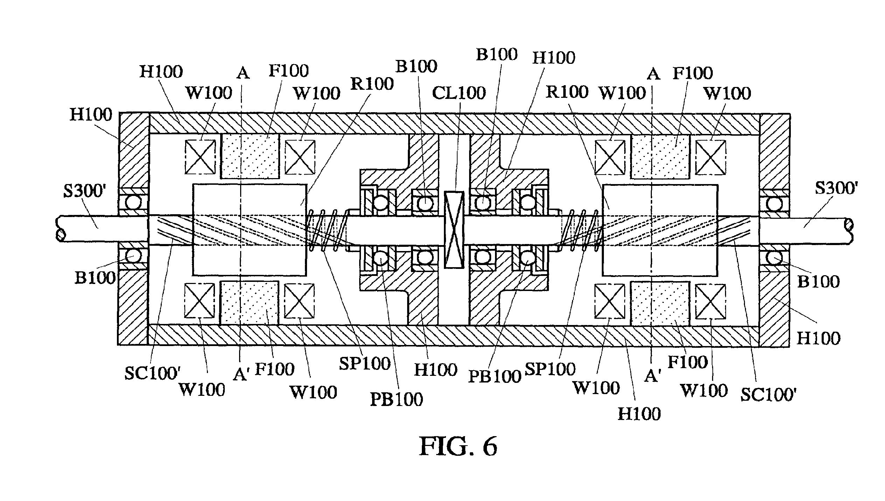

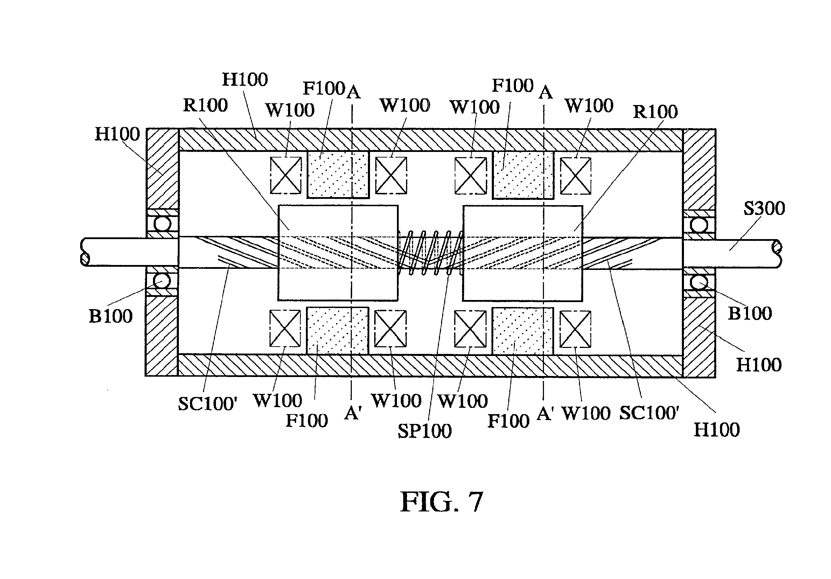

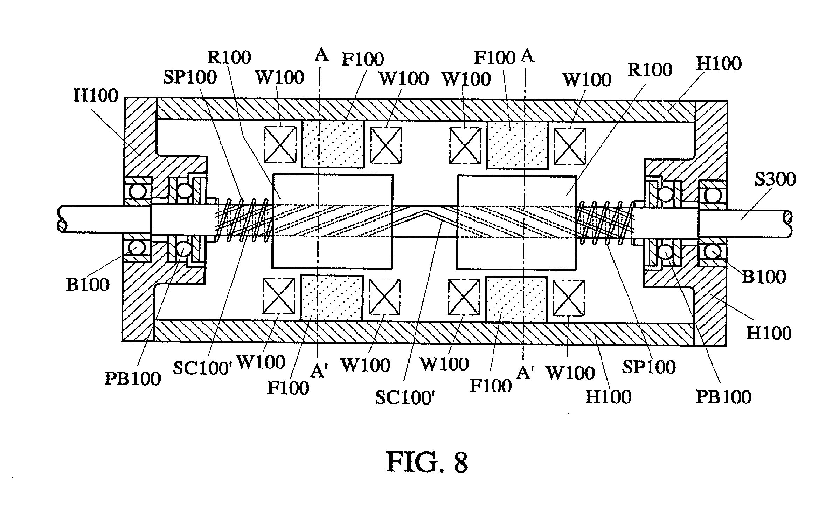

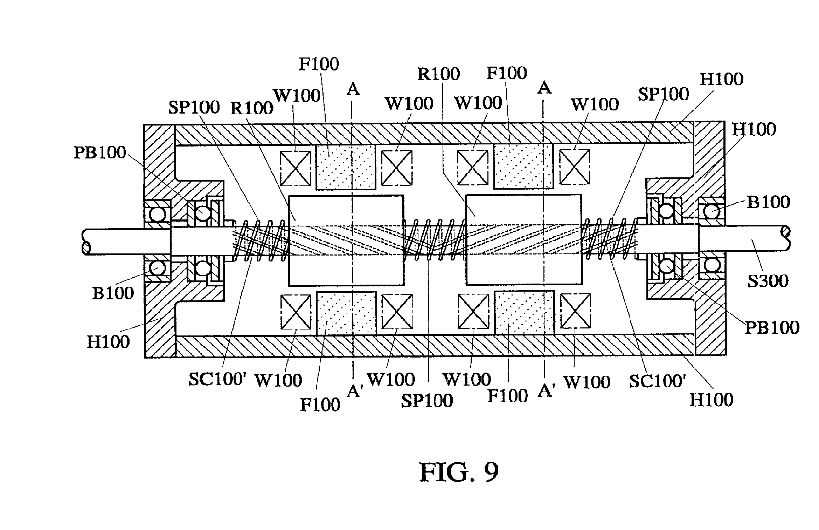

This rotor axial activation modulation of electric machinery due to reverse torque, further can be the helical propeller structure consist of the transmission shaft S300 with two sections of clockwise (CW) and counter clockwise helical propeller, or the reversible activation helical structure SC100' consist of helical propeller with ball bearing or roller bearing, to couple with the two individual electric machinery rotors R100, between the two electric machinery rotors installed with pre-stressed spring SP100; the previously described transmission shaft S300 of the dual electric machinery rotors include the one body transmission shaft structure, Fig. 4 shows the cross sectional illustration of this invention where dual electric machinery rotors are fixed with one body transmission rotating shaft while between the two rotors there is installed pre-stressed spring structure, the cross sectional illustration along A-A' is the same as Fig. 2; or consist of two sections of individual transmission shaft S300', as shown in Fig. 5 is the cross sectional illustration of this invention where two electric machinery rotors with two sections of individual transmission rotating shaft structure, of which the cross sectional illustration along A-A' is the same as Fig. 2; or further between the two individual transmission shaft S300' there can be installed the clutch CL100 using human, or mechanical, or fluid, or electrical power so as to combine the two electric machinery rotors for connection operation or for individual separate operation, as shown in Fig. 6 is the cross sectional illustration of the realization example of Fig. 4 where between the two individual transmission shafts there is installed controllable clutch, its cross sectional illustration along A-A' is the same as Fig. 2; the previously described two individual electric machinery rotors R100 are coupled to their individual electric machinery magnetic field F100 structures, between the two electricmachinery rotors there is installed pre-stressed spring SP100, and the two individual electric machinery rotors R100 can be electric machinery rotors with same.characteristics or different characteristics, the two electric machinery magnetic fields F100 coupled by the two electric machinery rotors also can be electric machinery magnetic fields of same or different characteristics; this rotor axial activationmodulation of electric machinery due to reverse torque its constituents include:
(1) Axial pre-stressed spring SP100 installed between two electric machinery rotors R100, with one of them the reverse torque in the direction of rotation increases, the two individual electric machinery rotors R100 exhibit axial mutual compelling modulation displacement; as show in Fig. 7 is the cross sectional illustration of the realization of this invention where the pre-stressed spring is installed between the two electric machinery rotors, its cross sectional illustration along A-A' is the same as Fig. 2;
(2) Axial pre-stressed spring SP100 installed between two electric machinery rotors R100 and on the outside, with one of them the reverse torque in the direction of rotation increases, the two individual electric machinery rotors R100 exhibits axial mutual separating modulation displacement; as shown in Fig. 8 is the cross sectional illustration of the realization of this invention where the pre-stressed springs are installed on the outsides of the two electric machinery rotors, its cross sectional illustration along A-A' is the same as Fig. 2;
(3) Axial pre-stressed spring SP100 installed between two electric machinery rotors R100 and on the outer sides, with the positive or reverse torque in the direction of rotation increases, the two individual electric machinery rotors R100 exhibit axial mutual compelling or mutual separating modulation displacement; as show in Fig. 9 is the cross sectional illustration of realization of this invention where the pre-stressed spring is installed between the two electric machinery rotors and on the outsides, its cross sectional illustration along A-A' is the same as Fig. 2.

Similarly Fig. 5 is the realization example of this invention where two electric machinery rotors with individual transmission structures, or as shown in Fig. 6 is the realization example of this invention where in this application between the individual transmission shafts are installed with controllable clutches, the principle of installation for the pre-stressed spring is the same.

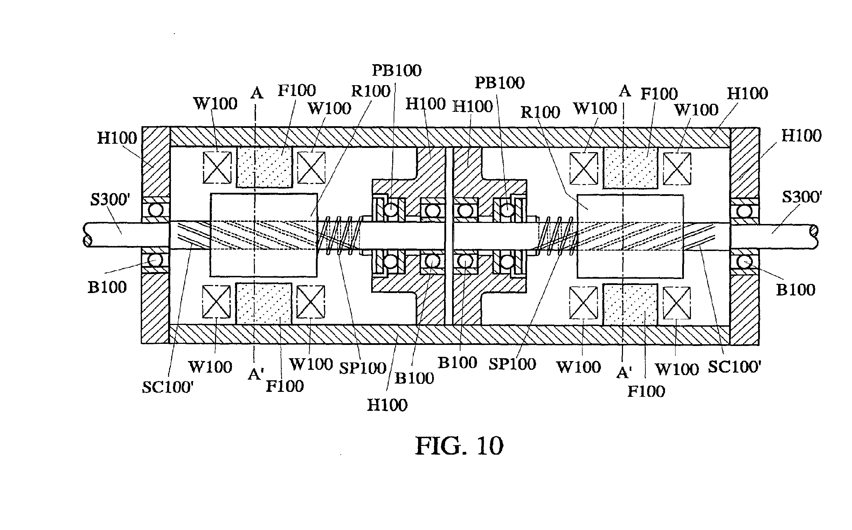

As shown in Fig. 10 is the cross sectional illustration of the realization example of this invention where the two electric machinery rotors each has its own transmission shaft and between the two electric motors there are installed pre-stressed springs, its cross sectional illustration along A-A' is the same as Fig. 2.

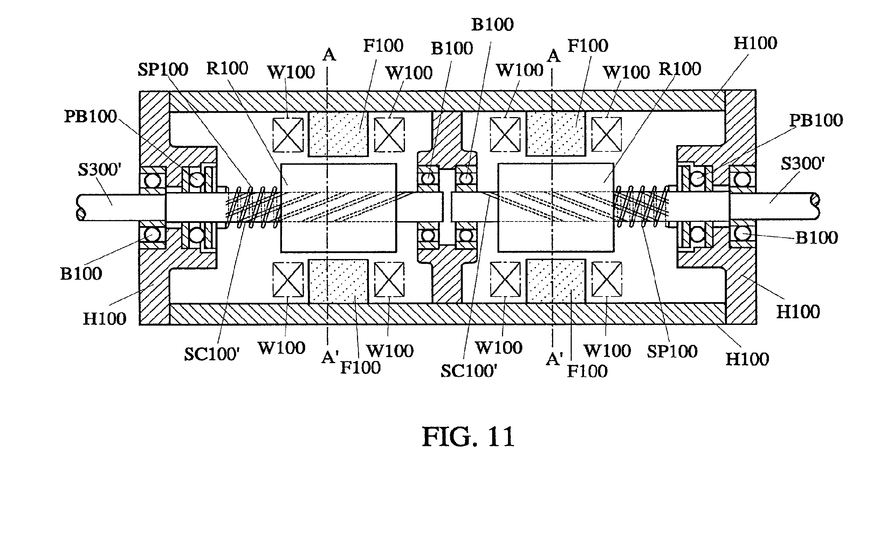

As shown in Fig. 11 is the cross sectional illustration of the realization example of this invention where the two electric machinery rotors each has its own transmission shaft and between the two electric machinery rotors and the outer stator there is installed pre-stressed spring, its cross sectional illustration along A-A' is the same as Fig. 2.

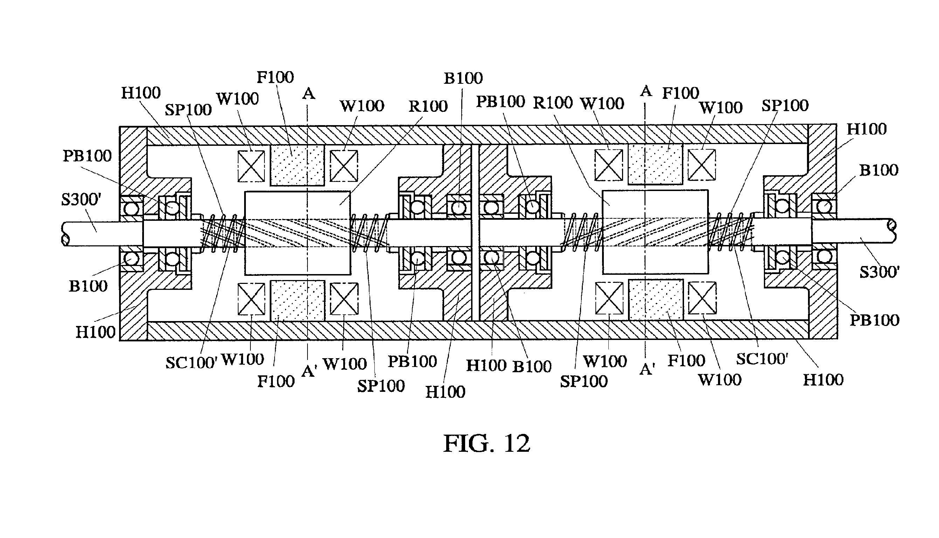

As shown in Fig. 12 is the cross sectional illustration of the realization example of this invention where the two electric machinery rotors each has its own transmission shaft and between the two electric machinery rotors and between the two electric machinery rotors and the outer stator there is installed pre-stressed spring, its cross sectional illustration along A-A' is the same as Fig. 2.

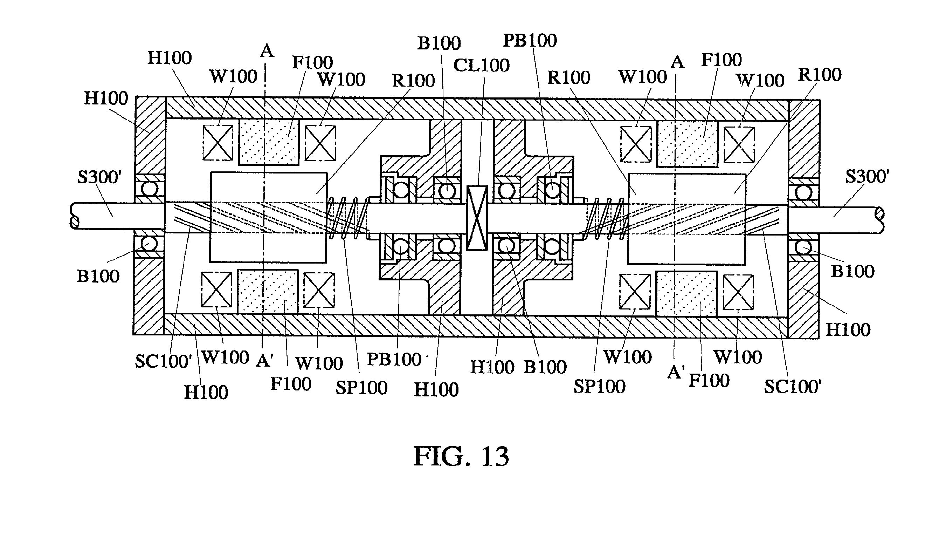

As shown in Fig. 13 is the cross sectional illustration of the realization example of this invention where between the individual transmission shaft of the two electric machinery rotors there are installed controllable clutches and between the two electric machinery rotors there are installed pre-stressed springs, its cross sectional illustration along A-A' is the same as Fig. 2.

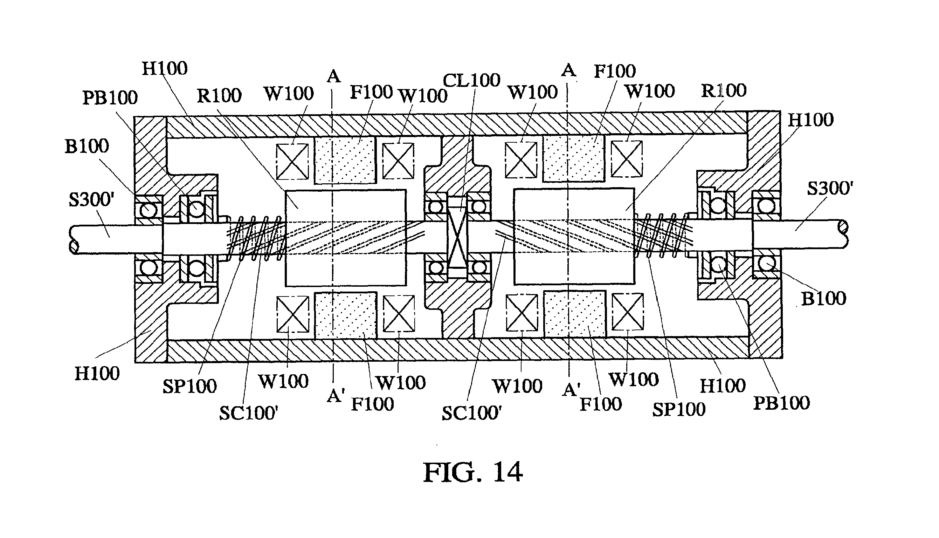

As shown in Fig. 14 is the cross sectional illustration of the realization example of this invention where between the individual transmission shaft of the two electric machinery rotors there are installed controllable clutches and between the two electric machinery rotors and the outer stator there are installed pre-stressed springs, its cross sectional illustration along A-A' is the same as Fig. 2.

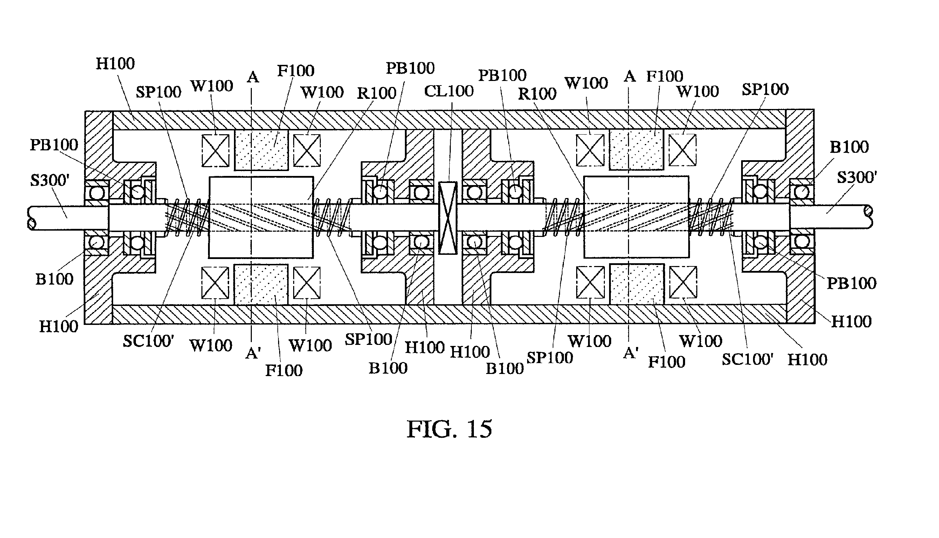

As shown in Fig. 15 is the cross sectional illustration of the realization example of this invention where between the individual transmission shaft of the two electric machinery rotors there are installed controllable clutches and between the two electric machinery rotors and between the two electric machinery rotors and the outer stator there are installed pre-stressed springs, its cross sectional illustration along A-A' is the same as Fig. 2.

The above stated dual electric machinery rotors structures can be installed with human, or mechanical, or fluid, or electrical driven relevant device so as to perform reversal driving to the transmission shaft, and further to modulate and set the relative position of the electric machinery rotor and electric machinery magnetic field, so as to actively modulate electric machinery characteristics and depending on the need to install the relative displacement limitation device or fixed positioning locking device between the electric machinery rotor and the transmission shaft, or can be installed with human, or mechanical, or fluid, or electrical driven relevant device for the pre-stressed modulation and setting mechanism of the axial pre-stressed spring, to actively modulate and setting the axial pre-stress of the pre-stressed spring towards the electric machinery rotor, to modulate and preset the position relationship between the electric machinery rotor and electric machinery magnetic field, further to modulate the electric machinery characteristics or pull selected control mechanism or testing device.

The above stated electric machinery with dual electric machinery rotors and each individual electric machinery magnetic field structure, include both are generators or both are motors, or one is generator and the other is motor structures.

This rotor axial activation modulation of electric machinery due to reverse torque its electromagnetic effect structural aspect of electric machinery rotor R100 and electric machinery magnetic field F100 include:
(1) The axial stack height of the magnetic core of the electric machinery rotor is greater than that of the electric machinery magnetic field;
(2) The axial stack height of the magnetic core of the electric machinery rotor is equal to that of the electro-magnetic field;
(3) The axial stack height of the magnetic core of the electric machinery rotor is less than that of the electro-magnetic field.

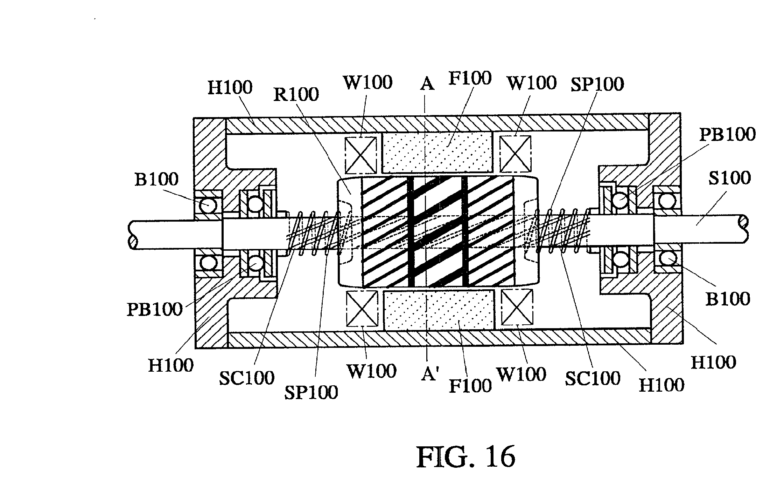

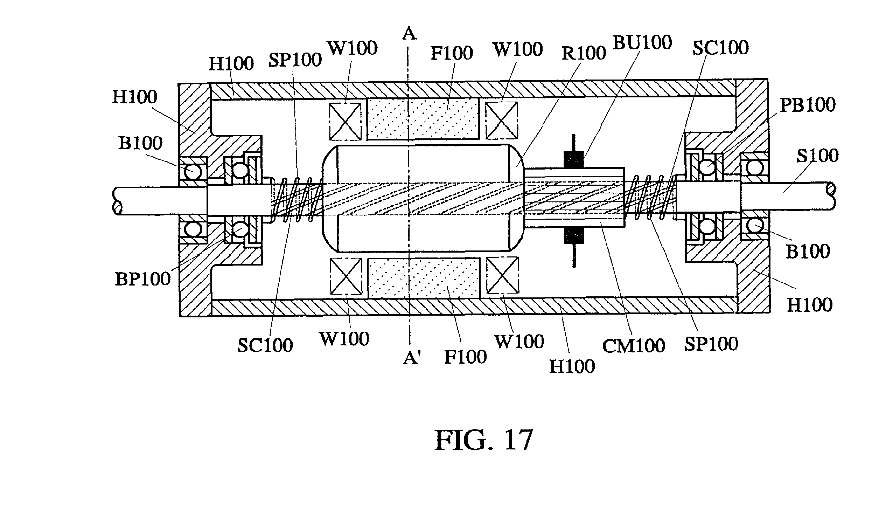

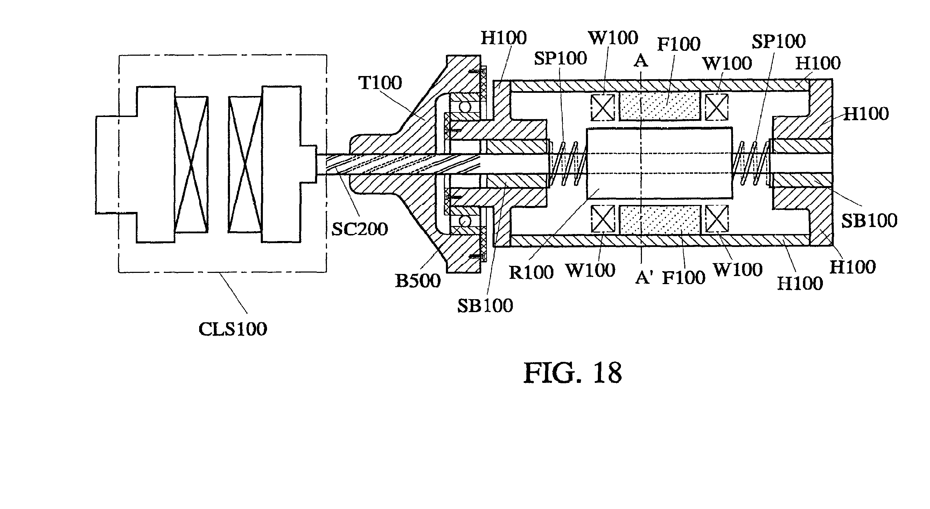

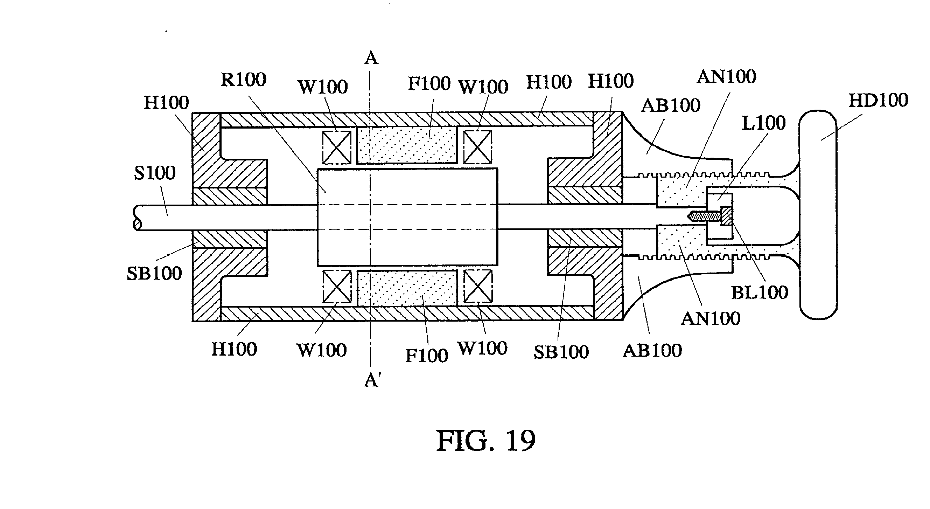

This rotor axial activation modulation of electric machinery due to reverse torque, its modulation model of generator or motor characteristics by producing axial displacement between its electric machinery rotor and electric machinery magnetic field, includes controllable voltage, current, frequency, etc. inputs versus output linear characteristics of the electric generator, and controllable motor speed, torque, synchronous or asynchronous, etc. input versus output linear characteristics or pulling axial control clutch CLS100 or pulling other selected control mechanism or testing device, this rotor axial activation modulation of electric machinery due to reverse torque, its reverse torque structure for rotor axial activation modulation of electric machinery includes:
(1) When the axial stack height of the magnetic core of the electric machinery rotor is greater than that of the electric machinery magnetic field, the modulation method of the electric machinery function is to make use of the magnetic poles of the electric machinery rotor and the electric machinery magnetic field in the axial corresponding displacement generated by using the centrifugal force, so as to couple the electric magnetic machinery rotor with fixed characteristics with different magnetic flux density or different gap, or different magnetic or different exciting method or any other different structure of different electric machinery physical property or electric machinery magnetic field structure of different electric machinery characteristics, so as to generate the needed operation and output characteristics of the generator or motor or to pull the selected control mechanism or testing device;
(2) When the axial stack height of the magnetic core of the electric machinery rotor is greater than that of the electro-magnetic field, the modulation method of the electric machinery function is to make use of the magnetic poles of the electric machinery rotor and the magnetic poles of the electro-magnetic field to generate axial pulling displacement by using the reverse torque, and the electric machinery rotor coupled by the electric machinery magnetic field can be axial multiple-section circuit squirrel-cage rotor structure, and each section of squirrel-cage rotor structure with different electric machinery characteristics, as shown in Fig. 16 is the realization example of this invention in the squirrel-cage rotor structure with multiple circuit, in which the cross sectional illustration along A-A' is the same as in Fig. 2; or can be rotors excited by windings or rotors consist of permanent magnetic type or salient type or hysteresis type or eddy current type, which has outer diameter that varies in axial direction, or armature of commutator type electric machinery rotor, to match the axial activation modulation displacement and with specific axially extended commutator CM100, so as to increase the coupling range with electric brush BU100; as shown in Fig. 17 is the realization example of this invention in armature with axially extended commutator, in which the cross sectional illustration along A-A' is the same as in Fig. 2; By re-arranging the various alternating current or direct current and brush or brushless electric machinery rotor, specifically with different outer diameter or different number of poles or different method of excitation, or electric machinery rotor consists of different electric machinery characteristics or different electric structures, in order to produce the desired operation and characteristics of generator or motor and transmission characteristics or pulling selected control mechanism or testing device;
(3) By installing the previously described in (1) and (2) of electric machinery magnetic field and electric machinery rotor with different physical characteristics and different electric machinery structure, to produce the selected generator or motor operation characteristics by using reverse torque for axial activation modulation of electric machinery or to pull axial control clutch CLS100 or to pull other selected control mechanism or testing device. As shown in Fig. 18 is the realization example of this invention in using reverse torque for axial activation modulation to pull axial control clutch, in which the cross sectional illustration along A-A' is the same as in Fig. 2;
(4) By installing the previously described in (1) and (2) of electric machinery magnetic field and electric machinery rotor with different physical characteristics and different electric machinery structure, and combining the relevant mechanism of controllable electric machinery rotor to perform axial displacement and position setting, by externally using human, or mechanical, or fluid, or electromagnetic effect driving, so as to modulate the relative electric machinery relative coupling position between the electric machinery rotor and the electric machinery magnetic field, further to modulate the electric machinery operation characteristics; as shown in Fig. 19 is the realization example of this invention in the electric machinery magnetic field or electric machinery rotor for axial modulation setting, in which the cross sectional illustration along A-A' is the same as in Fig. 2; its characteristics is to make use of one side of the rotating electric machinery stator for the installation of internal circular helical structure axial modulation seat AB100, for coupling to circular pulling block AN100, whereas the outer side of the circular pulling block AN100 are installed with helical structure, for the coupling to axial modulation seat AB100 inner circular helical structure, the threads of both helical structures are irreversible transmission type, circular pulling weight AN100 is for the circular weight block L100 and fixed screw BL100 to be fixed to the stepping section where the rotating shaft outer perimeter is smaller, so that when the circular pulling weight AN100 is rotated by the hand wheel HD100 or pulled by other human or mechanical or fluid or magnetic structure, can perform axial single or double directional pulling transmission shaft S100, so as to change the relative coupling positions between the electric machinery rotor connected to the transmission shaft S100 and the electric machinery magnetic field, and further to modulate the electric machinery characteristics, between the circular pulling weight AN100 and transmission shaft S100 can be rotary relative rotating, and depending on the need there can be installed bearing or lubricant sleeve structure.

The axial modulation preset structure example stated in Fig. 19 above, due to its many structures with similar functions, the realization example shown in Fig. 19 is just one of them, and is not used to limit the applications; other structures with same functions can be derived from commonly known related functional structures.

This rotor axial activation modulation of electric machinery due to reverse torque, its mechanical relative displacement driving relationship between the electric machinery rotor and electric machinery magnetic includes:
(1) External electric machinery rotor rotary electric machinery structure;
(2) Internal electric machinery rotor rotary electric machinery structure;
(3) Dual moving type in which the magnetic field structure and electric machinery rotor both are rotary;
(4) Linear electric driving.

This rotor axial activation modulation of electric machinery due to reverse torque, its structure includes:
(1) Cylindrical rotating electric machinery structure;
(2) Taper rotating electric machinery structure;
(3) Linear electric machinery structure.

To sum up, this rotor axial activation modulation of electric machinery due to reverse torque is to reveal, between the transmission shaft of the electric machinery and the electric machinery rotor or between the transmission shaft of the electric machinery and the transmission element driven, there is installed the reversible activation helical structure consist of helical propeller structure or helical propeller structure with ball bearing or roller bearing and axial pre-stressed spring, so that during the operation of the electric machinery, by use of the reverse torque and driving direction between the electric machinery rotor and the loading, to modulate the electric machinery rotor to perform axial displacement, and further to modulate the electric machinery characteristics between the electric machinery and electric machinery magnetic field or pulling axial control clutch CLS100 or pulling other selected control mechanism or testing device, the functions are precise and the ideas are innovative, and the applicant has searched through previous skills and found nothing whatsoever has been revealed, hence requests to grant approval by law.

### CLAUSES

Each clause presented below is intended to represent patentable subject-matter whether taken singularly, or in combination with any other clause.
1. A kind of rotor axial activation modulation of electric machinery due to reverse torque is between the electric machinery transmission rotating shaft and the electric machinery rotor, or between the electric machinery transmission rotating shaft and the transmission element driven, there is installed a reversible activation helical mechanism and axial pre-stressed spring consist of helical nut or helical nut with ball bearing or roller bearing structure that, during the operation of the electric machinery, depending on the magnitude of the torque between the electric machinery rotor and the loading, to produce axial displacement with the electric machinery rotor, and further to modulate its electric machinery characteristics with respect to the electric machinery magnetic field or to pull axial control clutch CLS100 or to pull other selected control structure or testing device.
2. As in Clause 1 of the detailed description of the preferred embodiments on the rotor axial activation modulation of electric machinery due to reverse torque, its major constituents include:
   - Electric machinery magnetic field F100: Including the constituents of DC or AC generators or motors structures; These structures include:
      F1: Between the poles of the electric machinery magnetic field and the electric machinery rotor of which the electric machinery magnetic field exhibits normal stable even distribution;
         or
      F2: Between the poles of the electric machinery magnetic field and the electric machinery rotor of which the axial single side or double sides exhibit different electric machinery magnetic field intensity; or
      F3: Between the poles of the electric machinery magnetic field and the electric machinery rotor of which the axial single side or double sides exhibit different gap structures with electric machinery rotor; or
      F4: Between the poles of the electric machinery magnetic field and the electric machinery rotor whose axial single side or double sides consist of multiple permanent magnetic poles or magnetic poles excited by magnetic windings W100 or combinations of both which consist of axial serial structures; or
      F5: The structures formed by two or more of the structures described in F1 through F4;
   - The electric machinery rotor R100: Including single or mixed electric machinery rotors consist of various commonly used or DC generators or motors such as permanent, salient, hysteresis , wound, brush, turbo, squirrel-cage type AC or DC or brush or brushless, synchronous or asynchronous, whereas or brush or brushless, synchronous or asynchronous, whereas its reverse torque structure for the rotor axial activation modulation includes: Between the electric machinery rotor R100 and transmission shaft S100 there is installed the reverse activation helical structure SC100 consists of helical nut structure or helical nut structure with ball bearing or roller bearing structure, between the electric machinery rotor R100 and single side or dual sides of the stator H100 there is installed the rotary bearing B 100 and thrust bearing PB 100, and there is installed a free movable rotating axial pre-stressed spring SP100, such that when the electric machinery rotor R100 and the transmission shaft S100 is operating as generator or motor, through the torque between the electric machinery rotor R100 and transmission shaft S100 acting on the reversible activation helical structure SC 100 in between and producing axial displacement along preset direction, so as to produce between the electric machinery rotor R100 and the electric machinery magnetic field F 100 the preset modulation of the generator or motor feature or pulling axial controlling clutch CLS100 or pulling other selected control structures or testing devices.
3. As in clause 1 of the detailed description of the preferred embodiments on the rotor axial activation modulation of electric machinery due to reverse torque between the transmission shaft S100 of the electric machinery and the transmission structure T100 on the loading side there is installed a reversible activation helical structure SC200 consist of helical propeller structure or helical propeller structure with ball bearing or roller bearing structure, between the transmission shaft S100 of the electric machinery and the stator H100 there is installed a bearing SB 100 for the rotary driving and axial displacement, and there is installed a bearing SB 100 for the transmission shaft S100 to perform rotary driving and axial displacement, and between the electric machinery rotor and single side or dual sides of the stator H100 there is installed a free movable rotating axial pre-stressed spring SP100 structure, whereas the transmission structure T100 on the output loading side, through the axial pulling resistance and rotating bearing B500 structure to connect to the stator H100, such that when the electric machinery rotor R100 and the transmission shaft S100 is operating as generator or motor, its reverse torque through the action of the reversible activation helical structure SC200 between transmission rotating shaft S100 and the transmission shaft on the loading side, and produce the axial displacement in the preset direction, so as to generate the modulation of the setting of generator or electric machinery features or pulling selected control structure or testing devices.
4. As in clause 2 of the detailed description of the preferred embodiments on the rotor axial activation modulation of electric machinery due to reverse torque, between the electric machinery rotor R100 and transmission rotating shaft S100 the installed reversible activation helical structure SC 100 consists of helical propeller structure or helical propeller structure with ball bearing or roller bearing structure, and further include using human, or mechanical, or fluid, or electrical driven relevant device to produce axial driving to the transmission shaft, modulate and setting the relative positions of the electric machinery rotor R100 and electric machinery magnetic field F100 to actively control the electric machinery characteristics or to pull selected control mechanism or testing devices, in addition depending on the need to install relative displacement limitation device between electric machinery rotor R100 and transmission rotating shaft S100 or position locking device.
5. As in clause 2 of the detailed description of the preferred embodiments on the rotor axial activation modulation of electric machinery due to reverse torque, between the electric machinery rotor R100 and transmission shaft S100 the installed reversible activation helical structure SC100 consists of helical propeller structure or helical propeller structure with ball bearing or roller bearing structure, between the axial pre-stressed spring SP100 structure installed on its single side or both sides and stator H100, can be further installed relevant structural device driven by human, or mechanical, or fluid, or electrical power, so as to produce pre-stressed control and axial displacement setting to the pre-stressed spring SP100, in order to actively control and setting pre-stressed spring SP100 for axial pre-stress of the electric machinery rotor R100, and to control and setting the relative relationship of the electric machinery rotor R100 and electric machinery magnetic field F100 and further to control the electric machinery characteristics or to pull selected control mechanism or testing devices.
6. As in clause 3 of the detailed description of the preferred embodiments on the rotor axial activation modulation of electric machinery due to reverse torque, between the transmission shaft S100 and the transmission structure on the loading side T100 there is installed the reversible activation helical structure SC200 consist of helical propeller structure or helical propeller with ball bearing or roller bearing structure, between the transmission shaft of the electric machinery rotor R100 and the stator H100 there is installed a bearing SB100 for the transmission shaft S100 to perform rotating driving and axial displacement, and between the electric machinery R100 and single side of double sides of the stator H100 there is installed a free movable rotating axial pre-stressed spring SP 100 structure, and further include using human, or mechanical, or fluid, or electrical driven relevant device to produce reversal driving to the transmission shaft S100, further to control and set the relative position of the electric machinery rotor R100 and electric machinery magnetic field F100, to actively control electric machinery characteristics or pull selected control structure or testing device, in addition depending on the need between the electric machinery rotor R100 and transmission shaft S100 there can be installed relative position limiting device or position locking device.
7. As in clause 3 of the detailed description of the preferred embodiments on the rotor axial activation modulation of electric machinery due to reverse torque, between the transmission shaft S100 and the transmission structure on the loading side T 100 there is installed a reversible activation helical structure SC200 consist of helical propeller structure or the helical propeller structure with ball bearing or roller bearing, between the transmission shaft S100 of the electric machinery rotor R100 and the stator H100 there is installed the bearing SB 100 for the transmission shaft for rotating driving and axial displacement, and between the electric machinery rotor R100 and single side or double sides of the stator H100 there is installed a free movable mutating axial pre-stress spring SP100 structure, and further to install include using human, or mechanical, or fluid, or electrical driven relevant device, so as to perform pre-stressed control and axial displacement setting to the pre-stressed spring SP 100, and actively control and set the axial pre-stress of the pre-stressed spring SP 100 with respective to the electric machinery rotor R100, and to control and set the positional relationship between the electric machinery rotor R100 and electric machinery magnetic field F 100, and further to control electric machinery characteristics or to pull selected control structure or testing device.
8. As in clause 1 of the detailed description of the preferred embodiments on the rotor axial activation modulation of electric machinery due to reverse torque, further can be the helical propeller structure consist of the transmission shaft S300 with two sections of clockwise (CW) and counter clockwise helical propeller, or the reversible activation helical structure SC100' consist of helical propeller with ball bearing or roller bearing, to couple with the two individual electric machinery rotors R100, between the two electric machinery rotors installed with pre-stressed spring SP100; the previously described transmission shaft S300 of the dual electric machinery rotors include the one body transmission shaft structure.
9. As in clause 8 of the detailed description of the preferred embodiments on the rotor axial activation modulation of electric machinery due to reverse torque, its dual electric machinery rotors can be consist of two sections each with its individual transmission shaft S300'.
10. As in clause 8 of the detailed description of the preferred embodiments on the rotor axial activation modulation of electric machinery due to reverse torque, between its two individual transmission shafts can further between the two individual transmission shaft S300' there can be installed the clutch CL100 using human, or mechanical, or fluid, or electrical power so as to combine the two electric machinery rotors for connection operation or for individual separate operation.
11. As in clause 8 of the detailed description of the preferred embodiments on the rotor axial activation modulation of electric machinery due to reverse torque, two individual electric machinery rotors R100 are coupled to their individual electric machinery magnetic field F100 structures, between the two electric machinery rotors there is installed pre-stressed spring SP100, and the two individual electric machinery rotors R100 can be electric machinery rotors with same characteristics or different characteristics, the two electric machinery magnetic fields F 100 coupled by the two electric machinery rotors also can be electric machinery magnetic fields of same or different characteristics; this rotor axial activation modulation of electric machinery due to reverse torque its constituents include:
   (1) Axial pre-stressed spring SP100 installed between two electric machinery rotors R100, with one of them the reverse torque in the direction of rotation increases, the two individual electric machinery rotors R100 exhibit axial mutual compelling modulation displacement;
   (2) Axial pre-stressed spring SP100 installed between two electric machinery rotors R100 and on the outside, with one of them the reverse torque in the direction of rotation increases, the two individual electric machinery rotors R100 exhibits axial mutual separating modulation displacement;
   (3) Axial pre-stressed spring SP100 installed between two electric machinery rotors R100 and on the outer sides, with the positive or reverse torque in the direction of rotation increases, the two individual electric machinery rotors R100 exhibit axial mutual compelling or mutual separating modulation displacement.
12. As in clause 8 of the detailed description of the preferred embodiments on the rotor axial activation modulation of electric machinery due to reverse torque, the dual electric machinery rotors structures can be installed with human, or mechanical, or fluid, or electrical driven relevant device so as to perform reversal driving to the transmission shaft, and further to modulate and set the relative position of the electric machinery rotor and electric machinery magnetic field, so as to actively modulate electric machinery characteristics and depending on the need to install the relative displacement limitation device or fixed positioning locking device between the electric machinery rotor and the transmission shaft, or can be installed with human, or mechanical, or fluid, or electrical driven relevant device for the pre-stressed modulation and setting mechanism of the axial pre-stressed spring, to actively modulate and setting the axial pre-stress of the pre-stressed spring towards the electric machinery rotor, to modulate and preset the position relationship between the electric machinery rotor and electric machinery magnetic field, further to modulate the electric machinery characteristics or pull selected control mechanism or testing device.
13. As in clause 8 of the detailed description of the preferred embodiments on the rotor axial activation modulation of electric machinery due to reverse torque, the electric machinery with dual electric machinery rotors and each individual electric machinery magnetic field structure, include both are generators or both are motors, or one is generator and the other is motor structures.
14. As in clause 1 of the detailed description of the preferred embodiments on the rotor axial activation modulation of electric machinery due to reverse torque, its electromagnetic effect structural aspect of electric machinery rotor R100 and electric machinery magnetic field F100 include: The axial stack height of the magnetic core of the electric machinery rotor is greater than or equal to or smaller than that of the electric machinery magnetic field.
15. As in clause 1 of the detailed description of the preferred embodiments on the rotor axial activation modulation of electric machinery due to reverse torque, its modulation model of generator or motor characteristics by producing axial displacement between its electric machinery rotor and electric machinery magnetic field, includes controllable voltage, current, frequency, etc. inputs versus output linear characteristics of the electric generator, and controllable motor speed, torque, synchronous or asynchronous, etc. input versus output linear characteristics or pulling selected control mechanism or testing device.
16. As in clause 1 of the detailed description of the preferred embodiments on the rotor axial activation modulation of electric machinery due to reverse torque, its reverse torque structure for rotor axial activation modulation of electric machinery includes: When the axial stack height of the magnetic core of the electric machinery rotor is greater than that of the electric machinery magnetic field, the modulation method of the electric machinery function is to make use of the magnetic poles of the electric machinery rotor and the electric machinery magnetic field in the axial corresponding displacement generated by using the centrifugal force, so as to couple the electric magnetic machinery rotor with fixed characteristics with different magnetic flux density or different gap, or different magnetic or different exciting method or any other different structure of different electric machinery physical property or electric machinery magnetic field structure of different electric machinery characteristics, so as to generate the needed operation and output characteristics of the generator or motor or to pull the selected control mechanism or testing device.
17. As in clause 1 of the detailed description of the preferred embodiments on the rotor axial activation modulation of electric machinery due to reverse torque, its reverse torque as electric machinery rotor axial activation modulation structure include: When the axial stack height of the magnetic core of the electric machinery rotor is greater than that of the electro-magnetic field, the modulation method of the electric machinery function is to make use of the magnetic poles of the electric machinery rotor and the magnetic poles of the electro-magnetic field to generate axial pulling displacement by using the reverse torque, and the electric machinery rotor coupled by the electric machinery magnetic field can be axial multiple-section circuit squirrel-cage rotor structure, and each section of squirrel-cage rotor structure with different electric machinery characteristics, or can be rotors excited by windings or rotors consist of permanent magnetic type or salient type or hysteresis type or eddy current type, which has outer diameter that varies in axial direction, or armature of commutator type electric machinery rotor, to match the axial activation modulation displacement and with specific axially extended commutator CM100, so as to increase the coupling range with electric brush BU100.
18. As in clause 1 of the detailed description of the preferred embodiments on the rotor axial activation modulation of electric machinery due to reverse torque, its reverse torque as electric machinery rotor axial activation modulation structure include: By installing the electric machinery magnetic field and electric machinery rotor with different physical characteristics and different electric machinery structure, to produce the selected generator or motor operation characteristics by using reverse torque for axial activation modulation of electric machinery or to pull axial control clutch CLS100 or to pull other selected control mechanism or testing device.
19. As in clause 1 of the detailed description of the preferred embodiments on the rotor axial activation modulation of electric machinery due to reverse torque, electric machinery magnetic field and electric machinery rotor with different physical characteristics and different electric machinery structure, and combining the relevant mechanism of controllable electric machinery rotor to perform axial displacement and position setting, by externally using human, or mechanical, or fluid, or electromagnetic effect driving, so as to modulate the relative electric machinery relative coupling position between the electric machinery rotor and the electric machinery magnetic field, further to modulate the electric machinery operation characteristics; its characteristics is to make use of one side of the rotating electric machinery stator for the installation of internal circular helical structure axial modulation seat AB100, for the coupling to circular pulling block AN100, whereas the outer side of the circular pulling block AN100 are installed with helical structure, for coupling to axial modulation seat AB100 inner circular helical structure, the threads of both helical structures are irreversible transmission type, circular pulling weight AN100 is for installing to the stepping section where the rotating shaft outer perimeter is smaller, so that when the circular pulling weight AN 100 is rotated by the hand wheel HD 100 or pulled by other human or mechanical or fluid or magnetic structure, can perform axial single or double directional pulling transmission shaft S100, so as to change the relative coupling positions between the electric machinery rotor connected to the transmission shaft S100 and the electric machinery magnetic field, and further to modulate the electric machinery characteristics, between the circular pulling weight AN100 and transmission shaft S100 can be rotary relative rotating, and depending on the need there can be installed bearing or lubricant sleeve structure.
20. As in clause 1 of the detailed description of the preferred embodiments on the rotor axial activation modulation of electric machinery due to reverse torque, its mechanical relative displacement driving relationship between the electric machinery rotor and electric machinery magnetic includes: External electric machinery rotor rotary electric machinery structure, or internal electric machinery rotor rotary electric machinery structure, or dual moving type in which the magnetic field structure and electric machinery rotor both are rotary or linear electric driving.
21. As in clause 1 of the detailed description of the preferred embodiments on the rotor axial activation modulation of electric machinery due to reverse torque, its electric machinery structure include: Cylindrical rotating electric machinery structure or taper rotating electric machinery structure or linear electric machinery structure.
22. A rotatable electric machine in which between the transmission rotatable shaft and the electric machine rotor or between the transmission rotatable shaft of the electric machine rotor and the driven transmission element, there is installed a reversible activation helical structure consisting of a helical nut structure, ball bearing or roller bearing helical nut structure and an axial pre-stressed spring; and, depending on the magnitude of the reverse torque between the electric machine rotor and the loading and the driven direction status, to control the electric machine rotor to perform axial displacement, and further to modulate the electric machine characteristics between the electric machine rotor and the electric machine magnetic field, or to pull a selected control mechanism or testing device.

## Claims

1. An electric machine comprising:
a stator comprising a magnetic field structure (F100) and a stator winding (W100);
a rotor (R100) mounted on a rotary shaft (S100) and arranged to rotate relative to the stator, the rotor having a magnetic core;
an external structure for driving the rotor (R100) to cause axial displacement of the rotor and thereby change the magnetic coupling position between the rotor (R100) and a magnetic field structure (F100) in response to a reverse torque, the reverse torque resulting from interaction between the rotor, the stator, a load, or the external structure when the rotary shaft rotates, wherein the axial stack height of the magnetic core of the rotor is greater than that of magnetic field of the electric machine.

2. An electric machine as claimed in claim 1, wherein the external structure comprises a mechanical structure driven by human power, electric power, hydraulic power or mechanical power.

3. An electric machine as claimed in claim 1 or claim 2, wherein the external structure comprises an axial displacement structure (HD 100, AN 100, AB100) connected to the rotary shaft and a circular pulling block comprising a hand wheel (HD 100), wherein the axial displacement structure may be actuated by the hand wheel, the axial displacement structure further comprising a circular pulling block (AN100), a circular weight (L100) connected to a fixed screw (BL100) wherein the circular pulling block is adapted to couple to the circular weight.

4. An electric machine as claimed in any one of claims 1 to 3, wherein the electric machine is a generator or a motor.

5. An electric machine as claimed in claim 4, wherein the rotor includes a multiple-section squirrel-cage rotor.

6. An electric machine as claimed in claim 5, wherein each section of said squirrel-cage has different electrical machine characteristics.

7. An electric machine as claimed in any one of claims 1 to 6, wherein the rotor comprises permanent magnetic poles.

8. An electric machine as claimed in any one of claims 1 to 6, wherein the rotor comprises exciting magnetic poles with conductive rings.

9. An electric machine as claimed in any one of claims 1 to 8, wherein the rotor comprises armature with commutator.

10. An electric machine as claimed in any one of claims 1 to 9, wherein the rotor comprises a reluctance rotor.

11. An electric machine as claimed in any one of claims 1 to 9, wherein the rotor comprises a turbulence rotor.

12. An electric machine as claimed in claim 1, wherein the rotor comprises electric poles formed by excitation windings driven by electricity introduced through inductive rings.

13. An electric machine as claimed in any one of claims 1 to 12, wherein the magnetic field structure is a stator.

14. An electric machine as claimed in any one of claims 1 to 12, wherein a magnetic field density between the rotor (R100) and the magnetic field structure(F100) varies, thereby to vary electric machine characteristics, with axial displacement of the rotor.

15. An electric machine as claimed in any one of claims 1 to 13 adapted to alter electric machine characteristics by changing a gap between the rotor (R100) and the magnetic field structure (F100) through axial displacement of rotor.
